**Europäisches Patentamt**

**European Patent Office**

**Office européen des brevets**

(19)

(11) Veröffentlichungsnummer: **0 197 307**
**A2**

## (12) EUROPÄISCHE PATENTANMELDUNG

(21) Anmeldenummer: **86103001.3**

(22) Anmeldetag: **06.03.86**

(51) Int. Cl.⁴: **B 60 T 11/20**

(30) Priorität: **12.03.85 DE 3508753**

(43) Veröffentlichungstag der Anmeldung:
**15.10.86 Patentblatt 86/42**

(84) Benannte Vertragsstaaten:
**DE FR GB IT**

(71) Anmelder: **LUCAS INDUSTRIES public limited company**
**Great King Street**
**Birmingham, B19 2XF West Midlands(GB)**

(72) Erfinder: **Schlüter, Peter**
**Trierer Strasse 42a**
**D-5400 Koblenz(DE)**

(74) Vertreter: **Wuesthoff, Franz, Dr.-Ing. et al,**
**Patentanwälte Wuesthoff -v. Pechmann-Behrens-Goetz**
**Schweigerstrasse 2**
**D-8000 München 90(DE)**

(54) **Hauptbremszylinder mit Füllstufe.**

(57) Ein Hauptbremszylinder für eine hydraulische Bremsanlage ist mit einem Bremskraftverstärker (12) und einer Füllstufe (14) versehen. Eine Füllkammer (42) der Füllstufe (14) ist mit einem Hydraulik-Flüssigkeit-Reservoir (61) über ein Ventil (80) derart verbindbar, daß bei funktionierendem Bremskraftverstärker (12) die Füllkammer (42) in der Anfangsphase der Bremspedalbetätigung geschlossen ist, während bei nicht funktionierendem Bremskraftverstärker (12) die Füllkammer (42) der Füllerstufe (14) mit dem Hydraulik-Flüssigkeit-Reservoir (61) leitend verbunden ist, so daß die Füllstufe unwirksam ist.

EP 0 197 307 A2

./...

FIG.1

PATENTANWÄLTE

# WUESTHOFF - v. PECHMANN - BEHRENS - GOETZ

EUROPEAN PATENT ATTORNEYS

DR.-ING. FRANZ WUESTHOFF

DR. PHIL. FRANZ WUESTHOFF (1927-1956)

DIPL.-ING. GERHARD PULS (1952-1971)

DIPL.-CHEM. DR. E. FREIHERR VON PECHMANN

DR.-ING. DIETER BEHRENS

DIPL.-ING. DIPL.-WIRTSCH.-ING. RUPERT GOETZ

DIPL.-PHYS. DR. AXEL VON HELLFELD

D-8000 MÜNCHEN 90

SCHWEIGERSTRASSE 2

TELEFON: (089) 66 20 51

TELEGRAMM: PROTECTPATENT

TELEX: 5 24 070

TELEFAX: (089) 66 39 36 (III)

LUCAS INDUSTRIES

EP-59 991

## Hauptbremszylinder mit Füllstufe

Die Erfindung betrifft einen Hauptbremszylinder für eine hydraulische Bremsanlage mit einem Bremskraftverstärker und einer Füllstufe, die in der Anfangsphase einer Bremspedalbetätigung die Bremsanlage bei relativ kurzem Pedalweg mit Hydraulik-Flüssigkeit füllt und bei Erreichen eines Abschaltdruckes der Hydraulik-Flüssigkeit unwirksam wird.

Aus der US-PS 31 09 287 ist es bekannt, einen Tandem-Hauptbremszylinder so auszubilden, daß bei Ausfall des Bremskraftverstärkers der Primärkreis ausfällt und der Sekundärkolben direkt unter Umgehung des Verstärkers betätigt wird. Bei einem Ausfall des Bremskraftverstärkers fällt dort aber auch automatisch der Primärkreis aus, so daß nur noch die halbe Bremskraft zur Verfügung steht.

Aus der DE-OS 24 50 474 ist ebenfalls ein Hauptbremszylinder mit einem Bremskraftverstärker bekannt, bei dem bei Unterschreiten eines kritischen Betriebsdruckes des pneumatischen Bremskraftverstärkers der Primärkreis zum Reservoir hin geöffnet und somit zum Ausfall gebracht wird oder aber über eine Schalteinrichtung auf einen weiteren hydraulisch angesteuerten Hauptbremszylinder kleineren Durchmessers geschaltet wird. Bei nicht wirksamem Bremskraftverstärker ist dort entweder der Primärbremskreis ausgefallen, so daß nur die halbe Bremskraft zur Verfügung steht, oder aber, bei Umschalten auf den Hilfs-Hauptbremszylinder, es besteht die Gefahr, daß dieser versagt, da er

0197307
59 991

über lange Betriebsdauern nicht zum Einsatz kommt und deshalb
im Laufe der Zeit festkorrodieren kann.

Bei dem aus der DE-AS 24 60 529 bekannten Hauptbremszylinder
erfolgt bei einem Ausfall des Bremskraftverstärkers eine Umschaltung auf eine andere Übersetzungsstufe. Falls dort der Unter- oder Überdruck des Bremskraftverstärkers während einer
Bremsung ausfällt, wird das Bremspedal so lange mit geringem
Widerstand durchgetreten, bis eine mechanische Verbindung zwischen einem Hilfskolben und einem Primärkolben hergestellt ist.
Durch diese Unregelmäßigkeit im Pedalwiderstand könnte der
Fahrer irritiert und zu Fehlreaktionen verleitet werden.

Die vorstehend erwähnten Hauptbremszylinder des Standes der
Technik sind nicht mit einer Füllstufe versehen. Hauptbremszylinder mit einer sogenannten Füllstufe sind z.B. aus der US-PS
4 086 770 bekannt. Mit einer Füllstufe wird erreicht, daß bei
einer Bremsbetätigung in der Anfangsphase des Pedalweges die
Bremsanlage schnell mit Hydraulik-Flüssigkeit aufgefüllt wird.
Sobald ein bestimmter Druck in der Hydraulik-Flüssigkeit erreicht ist, schaltet die Füllstufe ab, d.h. wird unwirksam. Bei
weiterem Durchdrücken des Bremspedals wird in der Bremsanlage
kaum noch Hydraulik-Flüssigkeit bewegt, sondern der Pedaldruck
in bekannter Weise hydraulisch in Bremsdruck umgesetzt.

Die eingangs erwähnten Bremskraftverstärker unterstützen die
Wirkung des Bremspedals und weisen in der Regel zwei Kammern
mit einer beweglichen Trennwand auf, wobei mittels des Motors
zwischen den Kammern eine Druckdifferenz erzeugt wird, so daß
die bewegliche Trennwand die Wirkung des Bremspedals unterstützend auf die Kolben des Hauptbremszylinders drückt.

Wird ein Hauptbremszylinder mit Füllstufe und Bremskraftverstärker versehen, so entstehen bei einem Ausfall des Bremskraftverstärkers dadurch erhebliche Probleme, daß der Fahrer dann auch die Betätigungskraft für die Füllstufe bis zu dem
relativ hohen Abschaltdruck direkt über das Pedal aufbringen
muß. Eine solche Änderung des Pedalwiderstandes kann den Fahrer
irritieren.

Der Erfindung liegt deshalb die Aufgabe zugrunde, einen Hauptbremszylinder mit einer Füllstufe und einem Bremskraftverstärker zu schaffen, bei welchem der Fahrer auch bei einem Ausfall
des Bremskraftverstärkers keine störenden Unregelmäßigkeiten im
Widerstand des Bremspedals feststellt.

Erfindungsgemäß wird diese Aufgabe dadurch gelöst, daß die
Füllkammer der Füllstufe mit einem Hydraulik-Flüssigkeit-Reservoir über ein erstes Ventil verbindbar ist, welches bei funktionierendem Bremskraftverstärker schließt und bei nicht funktionierendem Bremskraftverstärker öffnet.

Liegt somit bei einem durch eine Druckdifferenz beaufschlagten
Bremskraftverstärker ein Unter- oder Überdruck an, so schließt
das Ventil die Füllkammer der Füllstufe ab, so daß diese wirksam ist. Liegt hingegen keine Druckdifferenz am Bremskraftverstärker, so öffnet das die Füllkammer verschließende Ventil, so
daß letztere mit einem Hydraulik-Flüssigkeit-Reservoir verbunden ist. In diesem Falle wird durch jede über das Bremspedal
eingeleitete Druckkraft in die Füllkammer nur Hydraulik-Flüssigkeit ohne Widerstand in das Reservoir bewegt. Die Füllstufe
ist somit nicht wirksam. Die hierdurch bedingte geringfügige
Verlängerung des Pedalweges wird vom Fahrer kaum wahrgenommen
und wirkt jedenfalls weniger störend als ein Sprung im Pedalwiderstand.

In einer bevorzugten Ausgestaltung der Erfindung ist vorgesehen, daß neben dem ersten Ventil ein zweites Ventil vorgesehen
ist, welches die Füllkammer ebenfalls mit dem Hydraulik-Flüssigkeit-Reservoir verbindet, also funktionsmäßig parallel zum
ersten Ventil geschaltet ist, und dann öffnet, wenn der Druck

0197307
59 991

der Hydraulik-Flüssigkeit in der Hochdruckkammer des Hauptbremszylinders einen vorgegebenen Wert übersteigt.

In einer bevorzugten Ausgestaltung der Erfindung ist weiterhin vorgesehen, daß das erste Ventil auch von der Hydraulik-Flüssigkeit in der Füllkammer in seine Schließstellung beaufschlagt ist. In dieser Anordnung wird das Ventil durch den in der Füllstufe erzeugten Druck geschlossen gehalten, so daß ein "Durchfallen" des Bremspedals verhindert ist, wenn die Druckdifferenz am Bremskraftverstärker während einer Bremsung ausfällt.

Da das erste Ventil bei nicht betätigter Bremse geöffnet ist, besteht eine freie Flüssigkeitsverbindung zwischen der Füllkammer und dem Hydraulik-Flüssigkeit-Reservoir, so daß eine mögliche Ausdehnung der Bremsflüssigkeit oder auch geringe Verluste kompensiert werden können.

In einer Weiterbildung der Erfindung ist vorgesehen, daß die bewegliche Wand des Bremskraftverstärkers den Füllkolben der Füllkammer direkt beaufschlagt, so daß der Fahrer bei funktionierendem Bremskraftverstärker den durch die Füllstufe bedingten Widerstand im Bremspedal und insbesondere die Änderung des Widerstandes bei Erreichen des Abschaltdruckes nicht wahrnimmt.

Nachfolgend ist die Erfindung anhand der Zeichnung näher beschrieben. Dabei zeigt:

Fig. 1 einen Hauptbremszylinder mit Füllstufe und Bremskraftverstärker;

Fig. 2 eine Detail-Ansicht aus Fig. 1 in vergrößertem Maßstab;

Fig. 3 einen Schnitt entlang der Linie A-A gemäß Fig. 2 und

Fig. 4 ein die Füllkammer der Füllstufe mit dem Hydraulik-Flüssigkeit-Reservoir verbindendes Ventil im Schnitt.

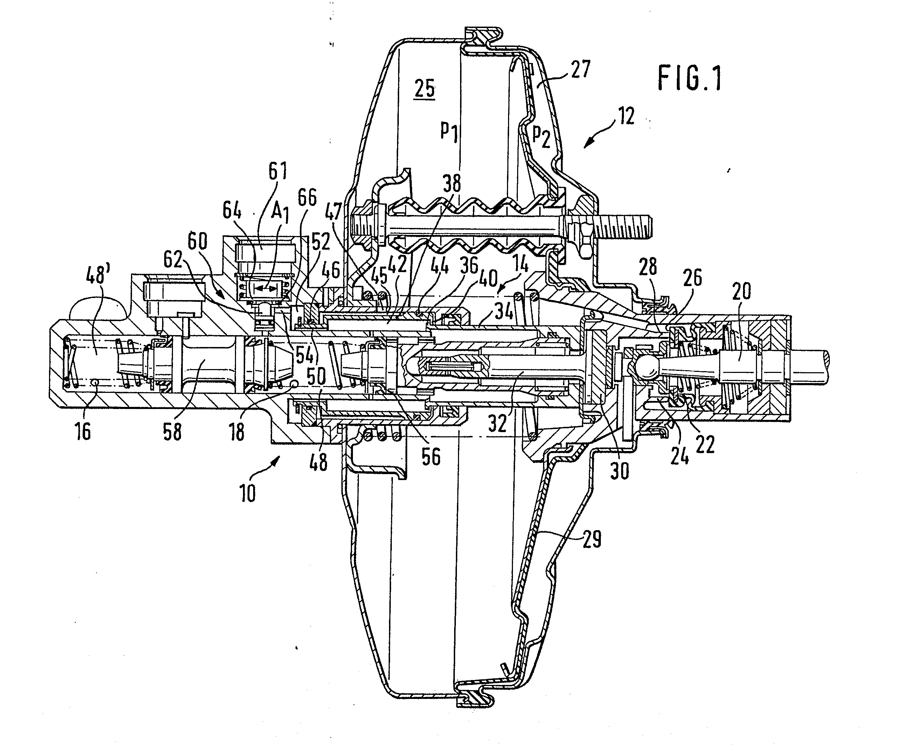

Gemäß Fig. 1 ist der Hauptbremszylinder 10 mit einem Bremskraftverstärker 12 versehen und weist eine Füllstufe 14 auf.
Der Hauptbremszylinder 10 versorgt in bekannter Weise zwei
Bremskreise, deren Anschlüsse durch die Bezugszeichen 16 und 18
angedeutet sind.

Die vom Fahrer über ein Bremspedal (nicht gezeigt) aufgebrachte
Kraft wird über ein Stößel 20 in den Hauptbremszylinder 10 eingeleitet. Die Ventilelemente 22, 26 sowie die Ventilsitze 24,
28 steuern in bekannter Weise den Bremskraftverstärker 12. Wird
der Stößel 20 in Fig. 1 nach links verschoben, so legt sich das
ringförmig elastische Ventilelement 22 auf den zugehörigen Ventilsitz 24 und trennt die Verbindung zwischen den Kammern 25
und 27 des Bremskraftverstärkers, zwischen denen die bewegliche
Wand 29 angeordnet ist. Bei weiterer Bewegung trennt sich das
ringförmige Ventilelement 26, welches einstückig mit dem Ventilelement 22 ausgebildet ist, von dem zugehörigen Ventilsitz
28 und Luft unter Atmosphärendruck ($p_2$) kann in die Überdruckkammer 27 einströmen.

Die bewegliche Trennwand 29 des Bremskraftverstärkers 12 beaufschlagt ebenso wie der Stößel 20 einen Füllkolben 34 der Füllstufe 14. Der Füllkolben 34 ist an seinem vorderen Ende mit einer Nase 36 versehen, welche hinter eine Nase 40 eines Ringkolbens 38 greift. Der Füllkolben 34 und der Ringkolben 38 sind
teleskopisch miteinander verbunden, d.h. der Füllkolben 34 läßt
sich in den Ringkolben 38 einschieben.

Innerhalb des Ringkolbens 38 ist die Füllkammer 42 eingeschlossen. Dichtungen 44, 46 dichten den Außenraum 45 des Ringkolbens
38 ab. Dieser Außenraum 45 ist über eine Öffnung 47 mit der
Unterdruckkammer 25 des Bremskraftverstärker 12 verbunden.

Die Füllkammer 42 umfängt konzentrisch die Hochdruckkammer 58
des Hauptbremszylinders 10. Über einen Kanal 50, eine Kammer 52
und einen weiteren Kanal 54 ist die Füllkammer 42 mit einem unter atmosphärischen Druck stehenden Hydraulik-Flüssigkeit-Reservoir 61 verbindbar. Die Verbindung wird durch das Ventil 60 geöffnet oder geschlossen.

Zwischen der Füllkammer 42 und der Hochdruckkammer 48 ist eine abdichtende Manschette 56 angeordnet, welche Hydraulik-Flüssigkeit aus der Füllkammer in die Hochdruckkammer durchläßt. Die beiden Hochdruckkammern 48 und 48' werden in bekannter Weise durch einen Zwischenkolben 58 getrennt.

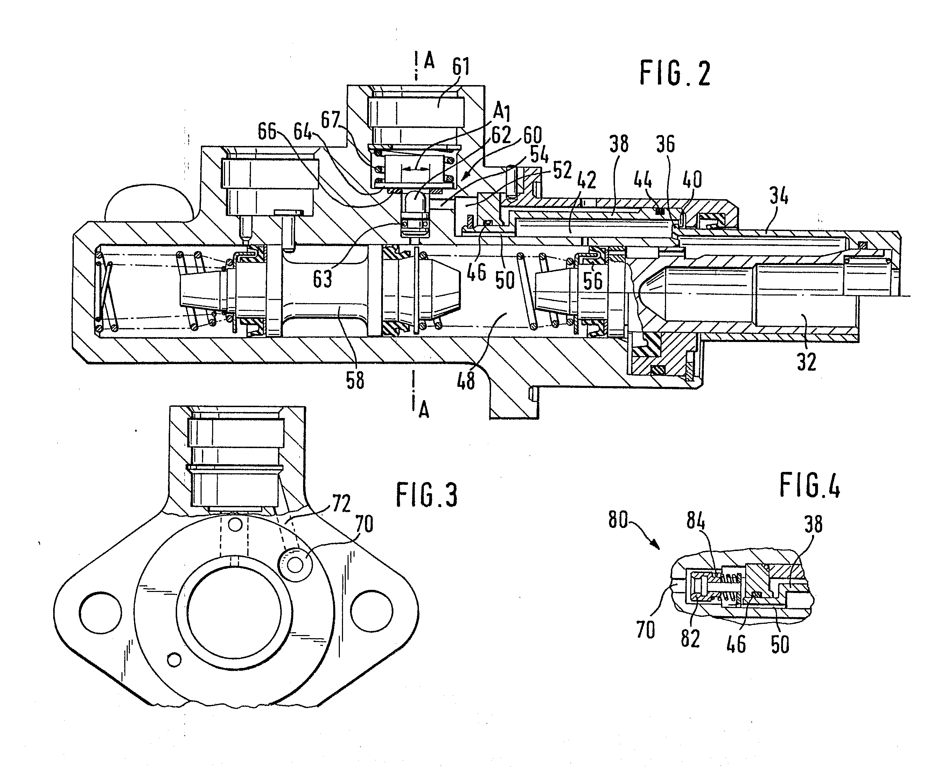

Das Ventil 60 ist in Fig. 2 im Detail dargestellt. Es verbindet die Füllkammer 42 mit dem Hydraulik-Flüssigkeit-Reservoir 61, wird aber über den Druck in der Hochdruckkammer 48 gesteuert. Hierzu dient ein Steuerkolben 62, der durch die Dichtung 63 abdichtend in dem Kanal zwischen Hochdruckkammer 48 und Ventil 60 geführt ist. Der Steuerkolben 62 wirkt auf eine Ventilplatte 64, welche durch eine Feder 67 auf die Dichtung 66 gedrückt wird.

Neben der durch das Ventil 60 gesteuerten Verbindung zwischen der Füllkammer 42 und dem Hydraulik-Flüssigkeit-Reservoir 61 ist noch eine weitere Verbindung zwischen letzteren vorgesehen, welche anhand der Fig. 3 und 4 erläutert wird. Der in Fig. 3 dargestellte Schnitt entlang der Linie A-A der Fig. 2 zeigt einen Kanal 70 und eine Querbohrung 72, welche die Füllkammer 42 unter Umgehung des Ventiles 60 mit dem Hydraulik-Flüssigkeit-Reservoir 61 verbinden. In dem Kanal 70 ist das Ventil 80 angeordnet. Das Ventil 80 weist einen Ventilkörper 82 auf, der durch eine Feder 84 vorgespannt wird, und wird vom Ringkolben 38 in der weiter unten beschriebenen Weise beaufschlagt.

Der dargestellte Hauptbremszylinder funktioniert wie folgt. Vor Beginn einer Bremsung befinden sich die Bauteile in der in Fig. 1 dargestellten Lage. Bei einer Betätigung des (nicht gezeigten) Bremspedals wird der Stößel 20 in Fig. 1 nach links verschoben. Wie oben beschrieben, wird über die Ventilelemente 22, 26 und Ventilsitze 24, 28 der Bremskraftverstärker in bekannter Weise betätigt.

Der Druckunterschied zwischen der Überdruckkammer 27 und der Unterdruckkammer 26, in welcher in bekannter Weise ein Vakuum erzeugt wird, bewirkt eine Bewegung der die Kammern trennenden Wand 29 in der Figur nach links. Dabei wird von der Wand 29 der Füllkolben 34 im Ringkolben 38 teleskopisch verschoben. Der Unterdruck $p_1$ in der Kammer 25 des Bremskraftverstärkers 12 wird durch die Öffnung 47 in den Außenraum 45 übertragen, welcher den Ringkolben 38 umgibt. Der Außenraum 45 ist durch die Dichtungen 44 und 46 begrenzt. Da sich der Ringkolben 38 gemäß den Fig. 1 und 2 links verjüngt, bewirkt die Druckdifferenz zwischen der Füllkammer 42 und dem Außenraum 45 eine Verschiebung des Ringkolbens 38 in den Figuren nach links. Diese Bewegung des Ringkolbens 38 bewirkt ein Schließen des Ventils 80, da der Ventilkörper 82 gegen die Kraft der Feder 84 auf die Bohrung 70 gedrückt wird (Fig. 4).

Die Füllkammer 42 ist somit vom Hydraulik-Flüssigkeit-Reservoir 61 getrennt und durch die Bewegung des Füllkolbens 34 wird in ihr ein Druck aufgebaut, welcher durch ein Umklappen der Manschette 56 zur Hochdruckkammer 48 übertragen wird. In der Füllkammer 42 und der Hochdruckkammer 48 herrscht also etwa der gleiche Druck. Bei überschreiten eines vorgegebenen Druckes in der Füllkammer 42 (und somit auch in der Hochdruckkammer 48) hebt der auf die Fläche $A_1$ des Ventils 60 wirkende Druck die Ventilplatte 64 gegen die Kraft der Feder 67 von der Dichtung 66 ab, so daß sich der Druck in der Füllkammer 42 über den Kanal 50, die Kammer 52 und den weiteren Kanal 54 in das Hydraulik-Flüssigkeit-Reservoir 61 abbauen kann. Der Druck in der Hochdruckkammer 48 wird hierdurch nicht verändert. Somit bleibt der Steuerkolben 62, welcher den Druck der Hochdruckkammer 48 auf die Ventilplatte 64 überträgt, in der das Ventil 60 öffnenden Stellung. Die Füllstufe 14 ist somit bei Erreichen eines vorgegebenen, durch die Fläche $A_1$ und die Feder 67 definierten Abschaltdruckes unwirksam, d.h., der Füllkolben 34 wird praktisch ohne Widerstand verschoben, ohne daß Hydraulik-Flüssigkeit in die Bremsanlage gepumpt wird.

Nach Aufhebung des Druckes auf das Bremspedal werden der Zwischenkolben 58 des Hauptbremszylinders 10 sowie der Füllkolben 34 durch die unter Druck stehende Hydraulik-Flüssigkeit und die in den Fig. 1 und 2 gezeigten Federn in ihre Ausgangslage nach rechts zurückgedrückt. Dabei kommt die Nase 36 des Füllkolbens 34 mit der Nase 40 des Ringkolbens 38 in Eingriff, so daß auch der Ringkolben 38 gegen die ihn nach links drückende Druckdifferenz $p_2$-$p_1$ in den Fig. 1 und 2 nach rechts verschoben wird. Auch das Ventil 80 wird bei dieser Rückwärtsbewegung der Bauteile geöffnet, so daß die Füllkammer wieder mit dem Hydraulik-Flüssigkeit-Reservoir verbunden und der Ausgangszustand wieder erreicht ist.

2064

PATENTANWÄLTE

WUESTHOFF - v. PECHMANN - BEHRENS - GOETZ

EUROPEAN PATENT ATTORNEYS

DR.-ING. FRANZ WUESTHOFF
DR. PHIL. FREDA WUESTHOFF (1927-1956)
DIPL.-ING. GERHARD PULS (1952-1971)
DIPL.-CHEM. DR. E. FREIHERR VON PECHMANN
DR.-ING. DIETER BEHRENS
DIPL.-ING. DIPL.-WIRTSCH.-ING. RUPERT GOETZ
DIPL.-PHYS. DR. AXEL VON HELLFELD

D-8000 MÜNCHEN 90
SCHWEIGERSTRASSE 2

TELEFON: (089) 66 20 51
TELEGRAMM: PROTECTPATENT
TELEX: 5 24 070
TELEFAX: (089) 66 39 36 (III)

LUCAS INDUSTRIES

EP-59 991

Patentansprüche :

1. Hauptbremszylinder für eine hydraulische Bremsanlage mit einem Bremskraftverstärker und einer Füllstufe, die in der Anfangsphase einer Bremspedalbetätigung die Bremsanlage bei relativ kurzem Pedalweg mit Hydraulik-Flüssigkeit füllt und bei Erreichen eines Abschaltdruckes der Hydraulik-Flüssigkeit unwirksam wird,
dadurch gekennzeichnet,
daß eine Füllkammer (42) der Füllstufe (14) mit einem Hydraulik-Flüssigkeit-Reservoir (61) über ein erstes Ventil (80) verbindbar ist, welches bei funktionierendem Bremskraftverstärker (12) schließt und bei nicht funktionierendem Bremskraftverstärker (12) öffnet.

2. Hauptbremszylinder mit einem durch eine Druckdifferenz $(p_2-p_1)$ beaufschlagten Bremskraftverstärker (12),
dadurch gekennzeichnet,
daß das erste Ventil (80) bei einer gegebenen Druckdifferenz schließt und bei nicht gegebener Druckdifferenz öffnet.

3. Hauptbremszylinder nach einem der Ansprüche 1 oder 2,
dadurch gekennzeichnet,
daß ein zweites Ventil (60) vorgesehen ist, welches die Füllkammer (42) funktionsmäßig parallel zum ersten Ventil (80) mit dem Hydraulik-Flüssigkeits-Reservoir (61) verbindet und dann öffnet, wenn der Druck der Hydraulik-Flüssigkeit in der Hochdruckkammer (48) des Hauptbremszylinders (10) einen vorgegebenen Wert übersteigt.

0197307
59 991

4.  Hauptbremszylinder nach einem der vorhergehenden Ansprüche,

dadurch  g e k e n n z e i c h n e t ,

daß die Füllkammer (42) und die Hochdruckkammer (48) durch eine Dichtungsmanschette (56) getrennt sind, welche Hydraulik-Flüssigkeit von der Füllkammer (42) in die Hochdruckkammer (48) durchläßt.

5.  Hauptbremszylinder nach einem der vorhergehenden Ansprüche,

dadurch  g e k e n n z e i c h n e t ,

daß das erste Ventil (80) von der Hydraulik-Flüssigkeit in der Füllkammer (42) in seine Schließstellung beaufschlagt ist.

6.  Hauptbremszylinder nach einem der vorhergehenden Ansprüche,

dadurch  g e k e n n z e i c h n e t ,

daß die Füllkammer (42) die Hochdruckkammer (48) zumindest teilweise koaxial umgibt.

7.  Hauptbremszylinder nach einem der Ansprüche 2-6,

dadurch  g e k e n n z e i c h n e t ,

daß ein Füllkolben (34) der Füllkammer (42) von einer beweglichen Wand (29) des Bremskraftverstärkers (12) direkt beaufschlagt ist.

8.  Hauptbremszylinder nach einem der Ansprüche 2-7,

dadurch  g e k e n n z e i c h n e t ,

daß ein Ringkolben (38) vorgesehen ist, welcher derart von der Druckdifferenz $(p_2-p_1)$ des Bremskraftverstärkers (12) beaufschlagt ist, daß er das erste Ventil (80) bei gegebener Druckdifferenz schließt und bei nicht gegebener Druckdifferenz öffnet.

9.     Hauptbremszylinder nach Anspruch 8,

dadurch  g e k e n n z e i c h n e t,

daß der Ringkolben (38) teleskopisch mit einem die Füllkammer
(42) der Füllstufe (14) beaufschlagenden Füllkolben (34) derart
verbunden ist, daß er bei nicht betätigter Bremse durch den
Füllkolben (34) in einer das erste Ventil (80) öffnenden und
bei Betätigung der Bremse in einer das erste Ventil (80)
schließenden Stellung angeordnet ist.

2064

FIG.1

FIG.2

FIG.3

FIG.4